# EUROPÄISCHE PATENTSCHRIFT

(11) **EP 2 052 830 B1**
(45) Veröffentlichungstag und Bekanntmachung des Hinweises auf die Patenterteilung: **11.09.2013**
(21) Anmeldenummer: 08018365.0
(22) Anmeldetag: 21.10.2008
(51) Int. Cl.: B29C 35/10, B29C 47/88, B29C 35/08, B29C 35/16

(54) **Verfahren zum Erwärmen eines extrudierten Kunststoffprofils durch Infrarothstrahlung**
Method for heating an extruded plastic profile by means of infrared radiation
Procédé de chauffage d'un profilé en matière plastique extrudé par rayonnement infrarouge

(30) Priorität: 23.10.2007 DE 102007050939
(43) Veröffentlichungstag der Anmeldung: 29.04.2009
(73) Patentinhaber: INOEX GmbH, 32547 Bad Oeynhausen (DE)
(72) Erfinder: Deters, Martin, 49143 Bissendorf (DE); Schmuhl, Jörg, Dr., 15711 Königs Wusterhausen (DE)
(74) Vertreter: Seewald, Jürgen

(56) Entgegenhaltungen:
- EP-B1- 0 921 921
- DE-A1- 19 916 474
- US-A- 4 636 405

## Beschreibung

Die vorliegende Erfindung betrifft ein Verfahren zum Erwärmen eines extrudieren Kunststoffprofils durch Infrarotstrahlung, insbesondere eines Rohres gemäß dem Oberbegriff des Anspruchs 1.

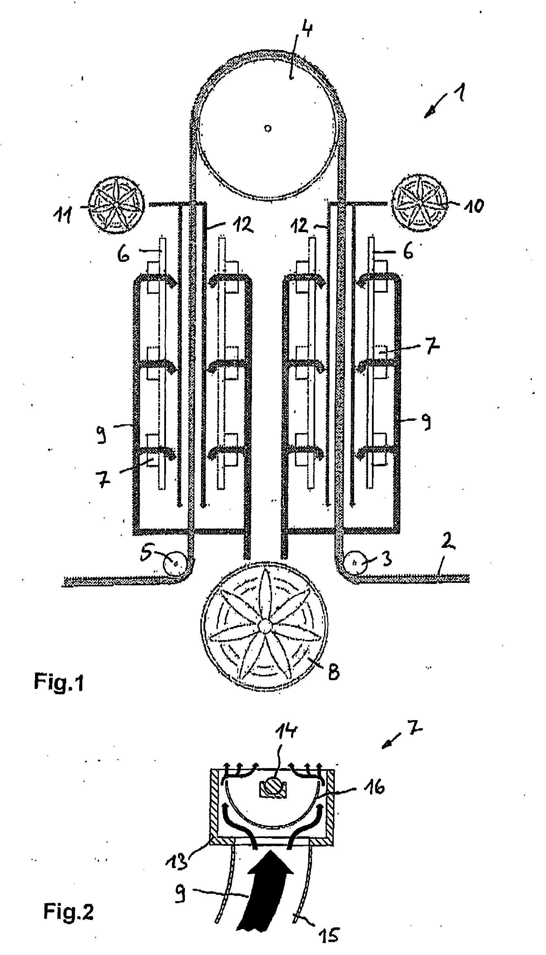

In Fig. 1 ist schematisch ein aus der Praxis bekannter Vernetzungsofen 1 dargestellt, der in einer Extrusionslinie zur Inline-Vemetzung von Polyethylen-Rohren eingesetzt wird. Das vom Extruder kommende Rohr 2 wird am Einlauf zum Vernetzungsofen 1 um eine Rolle 3 um 90° umgelenkt, so dass es den Vernetzungsofen 1 vertikal nach oben durchläuft. Dort ist eine größere Rolle 4 angeordnet, auf der das Rohr 2 um 180° umgelenkt wird und anschließend den Vernetzungsofen 1 vertikal nach unten durchläuft. Am Ausgang des Vernetzungsofens 1 wird das Rohr 2 auf einer weiteren Rolle 5 in die Horizontale umgelenkt und einer weiteren Behandlung zugeführt. Auf dem Weg durch den Vernetzungsofen 1 durchläuft das Rohr 2 vertikale Kanäle 6, an denen in mehreren Ebenen Infrarotstrahlungsquellen 7 angeordnet sind, die aus einem Gehäuse 13 und einem darin angeordnetem Infrarotstrahler 14 mit Reflektor 16 bestehen. (siehe Figur 2). Die Infrarotstrahler 14 strahlen in die Kanäle 6 ab, wodurch die für eine Vernetzung erforderliche Wärme in das Rohr 2 eingebracht wird. Die Gehäuse 13 sind zum Kanal 6 hin jeweils durch eine Glasscheibe (in Figur 2 nicht dargestellt) abgedeckt, um den Reflektor 16 und den Infrarotstrahler 14 selbst vor aggressiven Ausgasungen des Rohres 2 zu schützen. In die Gehäuse 13 der Infrarotstrahler 7 wird mittels eines Gebläses 8 über Schläuche15 Kühlluft 9 eingeblasen, die die Gehäuse 13 durch zum Kanal 6 hin offene Schlitze verlässt. In die Kanäle 6 wird ebenfalls Kühlluft 12 eingeblasen. Dazu sind entsprechende Gebläse 10 und 11 vorgesehen. Mit dieser Kühlluft 12 werden Temperaturspitzen und damit Verbrennungen an der Rohraußenhaut vermieden.

In der EP 0 921 921 B1 ist ein Vernetzungsofen gemäß dem Oberbegriff des Anspruchs 1 beschrieben. Bei diesem Ofen werden Verbrennungen der Rohraußenhaut durch ein Verfahren vermieden, bei dem die Wellenlängen der Infrarotstrahlung herausgefiltert werden, die Absorptionsspitzen des Polyethylens entsprechen, bzw. es werden Strahlungsquellen benutzt, die derartige Wellenlängen nicht abstrahlen. Im Falle eines Wegfilterns der störenden Wellenlängen wird ein Filter zwischen der Strahlungsquelle und dem Rohr angeordnet. Als geeignetes Filtermaterial wird z. B. Quarzglas angegeben. Mit diesem Verfahren können Verbrennungen der Rohraußenhaut vermieden werden. Es hat jedoch den Nachteil, dass auch nicht störende Wellenlängen weggefiltert werden, so dass die Heizleistung der Strahlungsquelle nicht optimal genutzt wird.

Aufgabe der vorliegenden Erfindung ist es, ein Verfahren zur Verfügung zu stellen, mit dem eine optimale Ausnutzung der Heizleistung von Infrarotstrahlungsquellen möglich ist und gleichzeitig Verbrennungen der Profilaußenhaut vermieden werden.

Diese Aufgabe wird erfindungsgemäß mit einem Verfahren gelöst, welches die Merkmale des Anspruchs 1 aufweist.

Das erfindungsgemäße Verfahren hat den Vorteil, dass der eingangs beschriebene, aus dem Stand der Technik bekannte Vernetzungsofen fast unverändert benutzt werden kann. Es ist lediglich erforderlich, dafür zu sorgen, dass der Druck des in das Gehäuse der Strahlungsquelle eingeblasenen Kühlmittelstroms bei Eintritt in den Kanal größer ist als der Druck des Kühlmittelstroms, mit dem das Kunststoffprofil gekühlt wird. Dadurch wird vor dem Gehäuse eine Druckluftbarriere aufgebaut, die verhindert, dass die aggressiven Ausgasungen des Kunststoffprofils sich auf die Strahlungsquelle und den Reflektor niederschlagen können. Eine schützende Glasscheibe vor dem Gehäuse ist daher nicht erforderlich. Dadurch wird das Kunststoffprofil durch das breite, ungefilterte Spektrum der Strahlungsquelle, also unter optimaler Ausnutzung der Heizleistung der Strahlungsquelle, erhitzt. Verbrennungen an der Außenhaut des Profils werden durch die intensive Kühlwirkung beider Kühlmittelströme vermieden.

Vorteilhafte Ausgestaltungen des erfindungsgemäßen Verfahrens ergeben sich aus den Unteransprüchen.

Die Erfindung wird nachstehend anhand eines Ausführungsbeispiels näher erläutert. In der dazugehörigen Zeichnung zeigt in schematischer Wiese:
- Fig. 1: einen Vernetzungsofen zur Durchführung des erfindungsgemäßen Verfahrens, und
- Fig. 2: einen Schnitt durch das Gehäuse eines Infrarotstrahlers mit eingezeichneten Kühlmittelströmen.

Das Ausführungsbeispiel betrifft die Vernetzung von Polyethylen-Rohren 2. Der dazu verwendete, in Figur 1 gezeigte Vernetzungsofen 1 entspricht in seinem Aufbau dem eingangs anhand von Fig. 1 erläuterten, aus dem Stand der Technik bekannten Vernetzungsofen 1, allerdings mit dem Unterschied, dass die Gehäuse 13 der Infrarotstrahlungsquellen 7 zum Kanal 6 hin nicht durch eine Glasscheibe abgedeckt sind. Möglich wird dies durch die erfindungsgemäße Einstellung der Drücke der Kühlmittelströme 9 und 12. Sowohl für die Kühlung des Rohres 2 als auch der Gehäuse 13 der Infrarotstrahler 14 wird Luft verwendet. Die Kühlluft für das Rohr 2 wird jeweils von oben durch Gebläse 10 bzw.11 in die Kanäle 6 eingeblasen, während die Kühlluft 9 für die Gehäuse 13 der Infrarotstrahler 14 über Schläuche 15 zugeführt wird, die jeweils in die Rückseite der Gehäuse 13 einmünden. Aus Fig. 2 geht hervor, dass der Kühlluftstrom 9 den Reflektor 16 umströmt und anschließend in den Kanal 6 eintritt.

## Patentansprüche

1. Verfahren zum Erwärmen eines extrudierten Kunststoffprofils (2) durch Infrarotstrahlung insbesondere eines Rohres, mit mindestens einer Strahlungsquelle (14), die in einen Kanal (6) abstrahlt, der von dem Kunststoffprofil (2) durchlaufen wird, und in einem Gehäuse (13) mit einem Reflektor (16) angeordnet ist, wobei in das Gehäuse (13) ein gasförmiges Kühlmedium (9) für die Strahlungsquelle (14) eingeblasen wird, welches in den Kanal (6) austritt, und in den Kanal (6) ein gasförmiges Kühlmedium (12) für das Kunststoffprofil (2) eingeblasen wird, **dadurch gekennzeichnet, dass** der Druck des in das Gehäuse (13) eingeblasenen Kühlmediums (9) beim Eintritt in den Kanal (6) größer ist als der Druck des Kühlmediums (12) für das Kunststoffprofil (2).

2. Verfahren nach Anspruch 1, **dadurch gekennzeichnet, dass** als Kühlmedium für das Gehäuse (13) und das Kunststoffprofil (2) Luft eingesetzt wird.

3. Verfahren nach Anspruch 1 oder 2, **dadurch gekennzeichnet, dass** die Kühlleistung der Kühlmedien in Abhängigkeit von der durch die mindestens eine Strahlungsquelle abgegebenen Energie geregelt wird.

4. Verfahren nach einem der vorhergehenden Ansprüche, **dadurch gekennzeichnet, dass** es zur Vernetzung von Polyethylen-Rohren eingesetzt wird.

## Claims

1. A process for heating an extruded plastic profile (2) by means of infrared radiation, in particular a pipe, having at least one radiation source (14) which radiates into a channel (6) through which the plastic profile (2) passes and is arranged in a housing (13) with a reflector (16), wherein a gaseous coolant (9) for the radiation source (14), which exits into the channel (6), is blown into the housing (13) and a gaseous coolant (12) for the plastic profile (2) is blown into the channel (6), **characterised in that** the pressure of the coolant (9) blown into the housing (13) is greater when it enters into the channel (6) than the pressure of the coolant (12) for the plastic profile (2).

2. A process according to Claim 1, **characterised in that** air is used as the coolant for the housing (13) and the plastic profile (2).

3. A process according to Claim 1 or 2, **characterised in that** the cooling capacity of the coolant is regulated depending on the energy emitted by the at least one radiation source.

4. A process according to one of the preceding claims, **characterised in that** it is used for cross-linking polyethylene pipes.

## Revendications

1. Procédé destiné au réchauffement d'un profilé en matière artificielle extrudé (2), en particulier d'un tube, par rayonnement infrarouge au moyen d'au moins une source de rayonnement (14), dont le rayonnement est dégagé dans un canal (6), dans lequel passe le profilé en matière artificielle et qui est disposé dans un boîtier (13) avec un réflecteur (12), un fluide de refroidissement gazeux (9) pour la source de rayonnement (14) étant insufflé dans le boîtier (13), fluide de refroidissement gazeux qui s'échappe vers le canal (6), et un fluide de refroidissement gazeux (12) pour le profilé en matière artificielle (2) étant insufflé dans le canal (6), **caractérisé en ce qu'**à l'entrée dans le canal (6), la pression du fluide de refroidissement gazeux (9) insufflé dans le boîtier (13) est supérieure à la pression du fluide de refroidissement (12) pour le profilé en matière artificielle (2).

2. Procédé suivant la revendication 1, **caractérisé en ce que** de l'air est utilisé comme fluide de refroidissement pour le boîtier (13) et le profilé en matière artificielle (2).

3. Procédé suivant la revendication 1 ou 2, **caractérisé en ce que** la puissance de refroidissement des fluides de refroidissement est réglée par l'énergie dégagée par l'au moins une source de rayonnement.

4. Procédé suivant une des revendications précédentes, **caractérisé en ce qu'**il est utilisé pour la réticulation de tubes en polyéthylène.
